# EUROPEAN PATENT APPLICATION

(11) **EP 2 622 966 A1**
(43) Date of publication of application: **07.08.2013**
(21) Application number: 11829101.2
(22) Date of filing: 27.09.2011
(51) Int. Cl.: A23D 9/00, C11C 3/00, C11C 3/10

(54) **FAT AND OIL COMPOSITION AND MANUFACTURING PROCESS THEREFOR**

(30) Priority: 27.09.2010 JP 2010214955
(71) Applicant: The Nisshin Oillio Group, Ltd., Chuo-ku Tokyo 104-8285 (JP)
(72) Inventor: ARAI Chie, Yokosuka-shi Kanagawa 239-0832 (JP); NAKAZAWA Yuto, Yokosuka-shi Kanagawa 239-0832 (JP); IJIMA Yoichiro, Yokosuka-shi Kanagawa 239-0832 (JP); UEHARA Hidetaka, Yokosuka-shi Kanagawa 239-0832 (JP); NEGISHI Satoshi, Yokosuka-shi Kanagawa 239-0832 (JP)
(74) Representative: Müller-Boré & Partner Patentanwälte
(86) International application number: PCT/JP2011/072048
(87) International publication number: WO 2012/043548

(57) **Abstract**

The present invention addresses the problem of developing an oil and fat composition which can be used for accelerating or omitting tempering in production process of chocolate, and is capable of maintaining StOSt type triglyceride crystals in a fine state stably, shows good dispersibility, and offers ease of handling such as subdivided packaging or the like.

An oil and fat composition comprising 4 to 40% by weight of StOSt type triglyceride, 20 to 80% by weight in total of PHX type triglyceride and HX2 type triglyceride, 8 to 50% by weight of X3 type triglyceride, said oil and fat composition comprising 70 to 100% by weight of the above triglycerides in total.

## Description

The present application claims priority under the Paris Convention based on Japan Patent Application 2010-214955, the entire disclosure of which is thus included in the present application.

### TECHNICAL FIELD

The present invention relates to an oil and fat composition maintaining StOSt type triglyceride crystals in a fine state stably, and a method of producing the oil and fat composition; and in particular an oil and fat composition effective in accelerating or omitting tempering in production process of chocolate and a method of producing the oil and fat composition.

### BACKGROUND ART

In the general production process of chocolate, when a melting chocolate mix after conching is molded and solidified, tempering is carried out for better mold releasing from a mold after solidification and for various improved properties such as gloss, luster, snap or the like. Tempering is a process that allows, by controlling the temperature of chocolate mix, triple-chain structure β form fat crystal cores of symmetric triglyceride to be formed.

However, tempering process in which the temperature of chocolate mix is once lowered to generate fat crystal cores and the mix once again is heated to turn the generated fat crystal cores into stable forms is cumbersome and requires rigorous temperature control. As an alternative method for this, a method called seeding method has been known, which method comprises adding crushed chocolate or cocoa butter or cocoa butter imitation as a seeding agent to chocolate mix in a melting state.

As seeding agents, powdered one (for example, Patent Documents 1 and 2) and one dispersed in liquid oil (for example, Patent Documents 3 and 4 ) have been known, but there have been drawbacks in that the powdered one requires thorough stirring for its uniform dispersion in chocolate and insufficient dispersion readily results in fat bloom. Also, one in which fat crystal cores are dispersed in liquid oil for easier dispersion in chocolate mix with high viscosity has had drawbacks in that the dispersion of the fat crystal cores becomes non-uniform over time, or the fat crystal cores coalesce to become bulkier.

### PRIOR ART REFERENCES

### PATENT DOCUMENTS

Patent Document 1: Japanese Patent Application Laid-Open Publication No. 63-240745
Patent Document 2: Japanese Patent Application Laid-Open Publication No. 01-60330
Patent Document 3: Japanese Patent Application Laid-Open Publication No. 02-406
Patent Document 4: Japanese Patent Application Laid-Open Publication No. 02-242639

### SUMMARY OF THE INVENTION

### PROBLEMS TO BE SOLVED BY THE INVENTION

An object of the present invention is to develop an oil and fat composition which can be used for accelerating or omitting tempering, in particular, in production process of chocolate, and is capable of maintaining StOSt type triglyceride crystals in a fine state stably, shows good dispersibility, and offers ease of handling such as subdivided packaging or the like.

### MEANS FOR SOLVING THE PROBLEMS

In order to solve the above problems, the present inventors intensively studied to discover that composing an oil and fat composition containing a StOSt type triglyceride with particular triglycerides enabled the above problems to be solved, thereby completing the present invention.

Accordingly, a first invention of the present invention is an oil and fat composition comprising 4 to 40% by weight of StOSt type triglyceride, 20 to 80% by weight in total of PHX type triglyceride and HX2 type triglyceride, and 8 to 50% by weight of X3 type triglyceride, the oil and fat composition comprising 70 to 100% by weight of the above triglycerides in total, wherein St represents stearic acid, O represents oleic acid, P represents palmitic acid, H represents saturated fatty acid, and X represents unsaturated fatty acid. A second invention of the present invention is the oil and fat composition according to the first invention of the present invention, wherein the content of HX2 type triglyceride is greater than the content of PHX type triglyceride. A third invention of the present invention is the oil and fat composition according to the first invention of the present invention or the second invention of the present invention comprising oil and fat whose StOSt content is not less than 30% by weight and transesterified oil of palm-based oil and fat and vegetable oil which are in a liquid state at 25°C. A fourth invention of the present invention is the oil and fat composition according to any one of the inventions from the first invention of the present invention to the third invention of the present which is in an aerated form. A fifth invention of the present invention is the oil and fat composition according to any one of the inventions from the first invention of the present invention to the fourth invention of the present invention in which a fat crystal comprises a triple-chain structure β form fat crystal. A sixth invention of the present invention is a seeding agent of chocolate comprising the oil and fat composition according to the fifth invention of the present invention. A seventh invention of the present invention is the seeding agent of chocolate according to the sixth invention of the present invention which is filled in pillow packaging or BIB packaging. An eighth invention of the present invention is a chocolate produced using said seeding agent according to the sixth or seventh invention of the present invention. A ninth invention of the present invention is a method for producing an oil and fat composition comprising the step of subjecting the oil and fat composition comprising 4 to 40% by weight of StOSt type triglyceride, 20 to 80% by weight in total of PHX type triglyceride and HX2 type triglyceride, and 8 to 50% by weight of X3 type triglyceride, said oil and fat composition comprising 70 to 100% by weight of the above triglycerides in total, to cooling crystallization from a melting state, followed by tempering at 12 to 30°C. A tenth invention of the present invention is the method of production according to the ninth invention of the present invention comprising the step of injecting nitrogen at the time of said cooling crystallization to turn said oil and fat composition into an aerated form. A eleventh invention of the present invention is an oil-based food product comprising said oil and fat composition according to any one of the inventions from the first invention of the present invention to the fifth invention of the present invention, wherein said oil and fat composition accounts for not less than 50% by weight of the total oil and fat.

### EFFECT OF THE INVENTION

By the present invention, an oil and fat composition maintaining StOSt type triglyceride crystals in a fine state stably is obtained. Because the oil and fat composition has plasticity and is thus soft or in a pasty state, it shows good dispersibility when used as a seeding agent of chocolate, which allows high quality chocolate to be simply and conveniently obtained. In addition, it offers ease of handling such as subdivided packaging, which is convenient.

### MODE FOR CARRYING OUT THE INVENTION

The present invention will be described in more detail below.
An oil and fat composition of the present invention contains 4 to 40% by weight of StOSt type triglyceride (hereinafter, may be abbreviated to StOSt). Here, St means stearic acid and O does oleic acid. That is, StOSt refers to 1,3-distearoyl-2-oleoylglycerin. When StOSt is in an oil and fat composition and serves as a seeding agent of chocolate, it functions as a seed crystal (fat crystal core) and also functions as structure fat for imparting plasticity to the oil and fat composition. The StOSt content in the oil and fat composition is preferably 8 to 38% by weight and more preferably 10 to 36% by weight. In cases where the StOSt content is within the above range, moderate plasticity is rendered to the oil and fat composition, leading to ease of handling. And, because StOSt crystals are moderately dispersed in the oil and fat composition, the composition is readily dispersed uniformly in a chocolate mix when used as a seeding agent of chocolate, which is thus preferred.

An oil and fat composition of the present invention contains 20 to 80% by weight in total of PHX type triglyceride (hereinafter, may be abbreviated to PHX) and HX2 type triglyceride (hereinafter, may be abbreviated to HX2). Here, P means palmitic acid, H means a saturated fatty acid (also including P), and X means an unsaturated fatty acid. That is, PHX is a triglyceride in which P, H and X are bound as each one of fatty acid residues, and the binding position of each fatty acid residue on the glycerin backbone is not particularly restricted. Likewise, HX2 is a triglyceride in which H and two Xs are bound as the fatty acid residues and the binding position of each fatty acid residue on the glycerin backbone is not particularly restricted. When present in the oil and fat composition, PHX and HX2 are effective for dispersing crystals of StOSt in a fine state stably. The PHX content and HX2 content in the oil and fat composition are, in total, preferably 28 to 72% by weight, and more preferably 33 to 67% by weight. In addition, it is preferred that the HX2 content be greater than the PHX content (that is, the HX2 content > the PHX content). When the HX2 content is greater than the PHX content, StOSt crystals can be maintained in a fine state more stably, which is thereby preferred.

An oil and fat composition of the present invention contains 8 to 50% by weight of X3 type triglyceride (hereinafter, may be abbreviated to X3). Similarly to the above, X means an unsaturated fatty acid, and X3 means a tri-unsaturated triglyceride in which any unsaturated fatty acid residues are bound. An appropriate amount of X3 increases plasticity of the oil and fat composition and is effective for dispersing StOSt crystals in a fine state stably. The X3 content is preferably 10 to 40% by weight and more preferably 12 to 30% by weight.

In an oil and fat composition of the present invention, the above StOSt content, the above total content of PHX content and HX2 content, and the above X3 content are 70 to 100% by weight in total. With all of these conditions being met, StOSt crystals can be dispersed in a fine state stably. The above StOSt content, the above total content of PHX content and HX2 content, and the above X3 content are preferably 80 to 100% by weight in total and 90 to 100% by weight in total.

The above H is preferably a saturated fatty acid with 14 to 22 carbon atoms and more preferably a saturated fatty acid with 16 to 18 carbon atoms. The above X is preferably an unsaturated fatty acid with 16 to 24 carbon atoms and more preferably an unsaturated fatty acid with 16 to 18 carbon atoms.

An oil and fat composition of the present invention may be prepared by any method as long as triglycerides composing the oil and fat composition can be prepared to the above conditions. It is simple and convenient, and thereby preferred that oil and fat with a high StOSt content, oil and fat with a high total content of PHX content and HX2 content, and oil and fat with a high X3 content are prepared in advance and appropriately combined for the preparation. Shea fat, sal butter, mango kernel oil, Allanblackia fat, mowrah fat, Illipo butter, or fractionated high melting point or intermediate melting point fraction thereof can be used as the above oil and fat with a high StOSt content. In addition, it can be obtained by a method of transesterifying stearic acid or a lower alcohol ester thereof and high oleic acid oil such as high oleic safflower oil using a lipase preparation with selectivity for 1-and 3-positions, which method has been known. In the oil and fat with a high StOSt content, the StOSt content is preferably not less than 30% by weight, and more preferably not less than 40% by weight.

As the above oil and fat with a high total content of PHX content and HX2 content, palm-based oil and fat are preferred. The palm-based oil and fat mean palm oil or fractionated oil thereof, and processed oil thereof. Specifically, examples of the palm-based oil and fat include (1) palm olein and palm stearin which are one-step fractionated oils of palm oil, (2) palm olein (palm super olein) and palm mid fraction which are fractionated oils obtained by fractionating palm olein (two-step fractionated oils), (3) palm olein (soft palm) and palm stearin (hard stearin) which are fractionated oils obtained by fractionating palm stearin (two-step fractionated oils), and the like. In particular, it is preferred to use palm super olein with an iodine value of 62 to 72, and more preferably palm super olein with an iodine value of 65 to 72. Palm super olein is preferably used as a mixture with oil and fat with a high X3 content which are described later.

Further, as another mode of the above oil and fat with a high total content of PHX content and HX2 content, what is preferred is transesterified oil of mixed oil whose mix ratio (weight ratio) between palm-based oil and fat and vegetable oil which are described as oil with a high X3 content and are in a liquid state at room temperature (25°C) is 10:90 to 90:10, more preferably 20:80 to 80:20. A method of transesterification is not particularly restricted and a common method can be employed. Transesterification can be performed by both methods of chemical transesterification using a synthesis catalyst such as sodium methoxide and enzymatic transesterification using lipase as a catalyst. Enzymatic transesterification using lipase with selectivity for 1- and 3-positions as a catalyst is preferred.

As for chemical transesterification, a reaction can be carried out, for example, by drying sufficiently raw material oil and fat, adding 0.1 to 1% by weight of sodium methoxide based on raw material oil and fat, and stirring the resulting mixture under reduced pressure at 80 to 120°C for 0.5 to 1 hour. As for enzymatic transesterification, a reaction can be carried out, for example, by adding a lipase preparation which is lipase powder or immobilized lipase in the amount of 0.02 to 10% by weight, preferably 0.04 to 5% by weight based on raw material oil and fat and stirring the resulting mixture at 40 to 80°C, preferably 40 to 70°C for 0.5 to 48 hours, preferably for 0.5 to 24 hours.

The total content of the PHX content and HX2 content in the above oil and fat with a high total content of PHX content and HX2 content is preferably not less than 50% by weight, more preferably not less than 60% by weight, and most preferably not less than 70 weight%. In addition, it is preferred that the HX2 content be greater than the PHX content (that is, the HX2 content > the PHX content).

As the above oil and fat with a high X3 content, vegetable oil which is in a liquid state at room temperature (25°C) is preferred. Specifically, examples thereof include soy bean oil, rapeseed oil, corn oil, sunflower oil, safflower oil, sesame oil, cotton seed oil, rice oil, olive oil, peanut oil, linseed oil and the like, and multiple mixed oil thereof, and processed oil derived from one of the preceding oils alone or multiple mixed oil, examples of which processed oil include hydrogenated oil, transesterified oil, fractionated oil and the like. In such vegetable oil in a liquid state, the X3 content is preferably not less than 50% by weight and more preferably not less than 70% by weight. Further, one which is in a liquid state even at a temperature of 5°C and has transparency is more preferred.

It is preferred to prepare an oil and fat composition of the present invention by, for example, combining 10 to 90% by weight of oil and fat with a high total content of PHX content and HX2 content based on 10 to 90% by weight of oil and fat with a high StOSt content. In another mode, it is preferred to prepare by combining 10 to 50% by weight of oil and fat with a high X3 content based on 50 to 90% by weight of oil and fat with a high StOSt content. In still another mode, it is preferred to prepare by combining 10 to 70% by weight of oil and fat with a high total content of PHX content and HX2 content and 10 to 70% by weight of oil and fat with a high X3 content based on 20 to 80% by weight of oil and fat with a high StOSt content. For example, in cases where preparation is carried out using oil and fat with a StOSt content of not less than 30% by weight, and transesterified oil of palm-based oil and fat and vegetable oil that is in a liquid state at 25°C, it is preferred to contain 10 to 45% by weight of the above oil and fat with a StOSt content of not less than 30% by weight, and 20 to 90% by weight of the above transesterified oil of palm-based oil and fat and vegetable oil that is in a liquid state at 25°C. It is more preferred to contain 20 to 40% by weight of the above oil and fat with a StOSt content of not less than 30% by weight, and 30 to 80% by weight of the above transesterified oil of palm-based oil and fat and vegetable oil that is in a liquid state at 25°C. Combining within the above range facilitates the StOSt content, the total content of PHX and HX2, X3 content, and the total content of triglyceride thereof in an oil and fat composition of the present application invention to be readily prepared. Analysis of triglyceride can be carried out by, for example, a gas chromatography method conforming to JAOCS, vo170, 11, 1111-1114(1993).

An oil and fat composition of the present invention is useful as a seeding agent of chocolate. The above seeding agent may contain solid contents such as saccharides, proteins or the like, and the oil and fat content of the seeding agent preferably contain 80 to 100% the oil and fat composition of the present invention. The above seeding agent effectively functions by preparing StOSt contained in the above oil and fat composition to triple-chain structure β form fat crystals. To prepare StOSt crystals in the seeding agent to triple-chain structure β form, preparation can be made by, for example, heating the seeding agent to a melt state where fat crystals are melted, cooling it preferably at 5 to 25°C and more preferably at 10 to 20°C for crystallization using a quick cooling mixing device such as Onlator, Votator or Kombinator which is usually used at the time of production of oil and fat having plasticity such as margarine, shortening or the like, wherein the resultant is in a state with plasticity or in a pasty state, followed by leaving it to stand for tempering preferably at 12 to 30°C, more preferably at 15 to 27°C, and still more preferably at 25 to 27°C preferably for 12 to 48 hours, more preferably for 15 to 24 hours and still more preferably for 12 to 24 hours. The seeding agent of the present invention is preferably used in a state with plasticity or in a pasty state, and, in that case, the content of the solid content such as saccharides, proteins or the like is preferably 0 to 30% by weight and more preferably 0% by weight. In cases where a seeding agent contains not less than 70% by weight solid contents such as saccharides, proteins or the like, it can be prepared, besides by the above method, for example by mixing oil and fat content containing an oil and fat composition of the present invention in a melt state where fat crystals are melted by heating with solid contents such as saccharides, proteins or the like and then pulverized by a roll refiner or the like to a pulverized state, followed by leaving the resultant to stand for tempering preferably at 12 to 30°C, more preferably at 15 to 27°C, and still more preferably at 25 to 27°C preferably for 12 to 48 hours, more preferably for 15 to 24 hours, and still more preferably for 12 to 24 hours. The seeding agent in this case is in a powdered state. Further, the oil and fat content of the seeding agent of the present invention contains more preferably contain 90 to 100% by weight and most preferably 100% by weight of the oil and fat composition of the present invention. The fat crystal size of a seeding agent of the present invention is preferably less than 10µm at 30°C.

In preparation of the above seeding agent of chocolate using an oil and fat composition of the present invention, it is preferred to produce so-called shortening which is in an aerated form by being injected nitrogen at the time of cooling crystallization. The amount of nitrogen injected is preferably 1 to 60 ml, more preferably 6 to 45 ml, still more preferably 8 to 40 ml based on 100 g of shortening. By setting the amount of nitrogen injected at the time of production around the above range, the particle size of fat crystals can be more readily maintained in a fine state (less than 10µm) and also ease of operation in cold storage (for example, at 4°C or below) can be improved.

Verification of the presence of triple-chain structure β form fat crystals in the oil and fat composition is determined from, for example, in the case of the above seeding agent, a diffraction peak obtained by measuring at 5°C X-ray diffraction of the oil and fat composition subjected to tempering under conditions for producing the seeding agent. That is, in X-ray diffraction for the fat crystal in the oil and fat composition, short spacing thereof is measured in a 2θ range of 17 to 26 degrees and when a diffraction peak corresponding to a spacing of 4.5 to 4.7 A is detected the β form crystal is judged to be present. Long spacing thereof is also measured in a 2θ range of 0 to 8 degrees and when a diffraction peak corresponding to 60 to 65 Å is detected, the crystal is judged to have a triple-chain structure.

It is preferred that a seeding agent of chocolate containing an oil and fat composition of the present invention be used for so-called tempering chocolate in which cocoa butter, palm oil, shea fat, sal butter, Allanblackia fat, mowrah fat, Illipo butter, mango kernel oil, all of which are rich in symmetric triglycerides, or fractionated oil thereof is used as oil and fat composing chocolate. In the step of cooling chocolate to solidify, when the product temperature of chocolate is preferably at 22 to 34°C and more preferably at 25 to 32°C, it is preferred to add, as expressed by the term of the oil and fat content in the seeding agent, preferably 0.05 to 2.0 parts by weight and more preferably 0.1 to 1.0 part by weight based on 100 parts by weight of chocolate. Use of a seeding agent containing an oil and fat composition of the present invention brought about an effect of accelerating or omitting tempering process in production of tempering chocolate. Chocolate according to the present invention refers to an oil and fat processed food product containing at least oil and fat and saccharides, and is not limited to chocolate mix and quasi or jyun chocolate mix defined by Japan Chocolate Industry Fair Trade Conference. In particular, so-called colored chocolate such as strawberry-flavored chocolate, powdered green tea- or maccha-flavored chocolate or the like is within the range of chocolate of the present invention. In oil and fat in chocolate, symmetric triglycerides in which oleic acid is bound at position 2 (HOH; H represents a saturated fatty acid and O represents oleic acid) are preferably contained not less than 10 % by weight. As the oil and fat content in chocolate, the symmetric triglycerides accounts for preferably 20 to 65 % by weight, more preferably 25 to 60 % by weight, and most preferably 30 to 55 % by weight.

Because a seeding agent containing an oil and fat composition of the present invention is obtained in a state with moderate plasticity or in a pasty state, it is suitable to be filled in pillow packaging or BIB (bag-in-box) packaging and be pushed out of the packaging to use in an appropriate amount at the time of use.

An oil and fat composition of the present invention is preferably one having reduced amounts of trans fatty acids over which health concerns have been raised. The trans fatty acid content of the oil and fat composition of the present invention is preferably less than 10% by weight, more preferably less than 5% by weight, and most preferably less than 2% by weight.

Further, by containing the oil and fat composition of the present invention in total oil and fat composing an oil-based food product whose continuous phase is oil and fat, such as filling, butter cream, spread, soft cheese, shortening, or the like, in the amount of not less than 50% by weight, preferably not less than 70% by weight, most preferably not less than 90% by weight, the oil-based food product having no separation of liquid oils and excellent mouthfeel, albeit low contents of saturated fatty acid and trans fatty acid, can be obtained. In particular, by preparing StOSt contained in the oil and fat composition of the present invention to triple-chain structure β form fat crystals, oil-based food products having no separation of liquid oils and excellent mouthfeel can be obtained.

Besides food products used commonly, known food additives may be added to chocolate and oil-based food products containing the oil and fat composition of the present invention. Examples of the food additives include emulsifiers, flavoring agents, proteins (milk solid), polysaccharide thickeners, antioxidants, food colors, and the like.

### EXAMPLES

By way of example, the present invention will be described in more detail.

### <Preparation of StOSt fat>

Based on a known method, a mixture of high oleic safflower oil and oleic acid ethyl ester was subjected to a transesterification reaction using a lipase preparation with selectivity for 1- and 3-positions and tri-saturated triglyceride was removed from the resultant and the resulting part was designated as StOSt fat A. Further, StOSt fat A was subjected to solvent fractionation to obtain stearin fraction (solid fat fraction), which was designated as StOSt fat B. The trans fatty acid content was both 0% by weight.

### <Preparation of transesterified oil and fat>

Based on a known method, mixed oil of 65 parts by weight palm oil and 35 parts by weight rapeseed oil was subjected to a transesterification reaction using a lipase preparation with selectivity for 1- and 3-positions, thereby obtaining transesterified oil A. The content of trans fatty acid was 0.6% by weight.

### <Other raw material oil and fat >

As other raw material oil and fat, rapeseed oil, palm olein (iodine value 56), palm super olein (iodine value 65) are provided. The trans fatty acid content was all 0.3% by weight. The contents of StOSt, PHX, HX2 and X3 in the above oil and fat are summarized in Table 1.

**[Table 1]**

| Table 1. Raw material oil and fat and triglyceride analysis values All units are % by weight. | | | | |
|---|---|---|---|---|
| | StOSt | PHX | HX2 | X3 |
| StOSt fat A | 43.5 | 3.0 | 40.5 | 7.4 |
| StOSt fat B | 85.9 | 4.4 | 3.9 | 0.0 |
| Transesterified oil A | 0.8 | 28.9 | 43.7 | 18.6 |
| Palm olein | 0.6 | 50.9 | 40.7 | 5.5 |
| Palm super olein | 0.3 | 30.8 | 55.6 | 9.0 |
| Rapeseed oil | 0.0 | 0.8 | 16.9 | 78.3 |

### <Preparation of oil and fat composition>

According to formulation in Tables 2 and 3, oil and fat compositions of Example 1 to 5 and Comparative Examples 1 to 3 were formulated. After crystals of those were completely melted at 60°C, quick cooling crystallization was performed at an outlet temperature of 20°C in Onlator, followed by tempering at 27°C for 24 hours.

### <Observation of states of oil and fat compositions>

Tempered oil and fat compositions were allowed to cool to 5°C, and the type of crystals of the oil and fat was analyzed by X-ray diffraction. In addition, the state of crystals which were left to stand at 20°C for 3 months was observed visually at 20°C (dispersion state) and under polarizing microscope at 30°C (crystal particle size). The results are shown also in Tables 2 and 3.

**[Table 2]**

| Table 2. Formulation of oil and fat composition and analysis values All units are % by weight. | | | | |
|---|---|---|---|---|
| | Example 1 | Example 2 | Example 3 | Example 4 |
| StOSt fat A | 25 | 80 | - | - |
| StOSt fat B | - | - | 20 | 30 |
| Transesterified oil A | 75 | - | 80 | 30 |
| Palm olein | - | - | - | - |
| Palm super olein | - | - | - | - |
| Rapeseed oil | - | 20 | - | 40 |
| Total | 100 | 100 | 100 | 100 |
| | | | | |
| Composition of triglycerides | | | | |
| StOSt | 11.4 | 34.8 | 17.8 | 26.0 |
| PHX | 22.4 | 2.6 | 24.0 | 10.3 |
| HX2 | 42.9 | 35.8 | 35.7 | 21.0 |
| X3 | 15.8 | 21.6 | 14.9 | 36.9 |
| Total | 92.5 | 94.8 | 92.4 | 94.2 |
| | | | | |
| Results of analysis observation | | | | |
| Type of fat crystals | | | | |
| Long spacing | Triple-chain structure was detected. | Triple-chain structure was detected. | Triple-chain structure was detected. | Triple-chain structure was detected. |
| Short spacing | β form was strongly detected. | β form was strongly detected. | β form was strongly detected. | β form was strongly detected. |
| State of fat crystals | | | | |
| Visual observation | Uniformly dispersed | Uniformly dispersed | Uniformly dispersed | Uniformly dispersed |
| Polarized light microscopy | Fine (less than 10µm) | Fine (less than 10µm) | Fine (less than 10µm) | Nearly fine (Crystals of not less than 10µm and less than 25µm in size were present.) |

**[Table 3]**

| Table 3. Formulation of oil and fat composition and analysis values All units are % by weight. | | | | |
|---|---|---|---|---|
| | Example 5 | Comparative Example 1 | Comparative Example 2 | Comparative Example 3 |
| StOSt fat A | - | - | - | - |
| StOSt fat B | 20 | 20 | 30 | 50 |
| Transesterified oil A | - | - | - | 40 |
| Palm olein | 65 | - | - | - |
| Palm super olein | - | - | 70 | - |
| Rapeseed oil | 15 | 80 | - | 10 |
| Total | 100 | 100 | 100 | 100 |
| | | | | |
| Composition of triglycerides | | | | |
| StOSt | 17.6 | 17.2 | 26.0 | 43.2 |
| PHX | 34.1 | 1.5 | 22.9 | 13.8 |
| HX2 | 29.8 | 14.3 | 40.1 | 21.2 |
| X3 | 15.3 | 62.6 | 6.3 | 15.3 |
| Total | 96.8 | 95.6 | 95.3 | 93.5 |
| | | | | |
| Results of analysis observation | | | | |
| Type of fat crystals | | | | |
| Long spacing | Triple-chain structure was detected. | Triple-chain structure was detected. | Triple-chain structure was detected. | Triple-chain structure was detected. |
| Short spacing | β form was detected. | β form was strongly detected. | β form was strongly detected. | β form was strongly detected. |
| State of fat crystals | | | | |
| Visual observation | Uniformly dispersed | Slight solid-liquid separation was observed. | Uniformly dispersed | Uniformly dispersed |
| Polarized light microscopy | Nearly fine (Crystals of not less than 10µm and less than 25µm in size were present.) | Crystals were coarse. (Crystals of not less than 25µm in size were seen.) | Crystals were coarse. (Crystals of not less than 25µm in size were seen.) | Crystals were coarse. (Crystals of not less than 25µm in size were seen.) |

### <Test production of chocolate using oil and fat composition>

According to formulation in Table 4, passing through rollers and conching were performed according to a conventional method to prepare a chocolate mix. For a chocolate mix kept at 30°C, the above oil and fat compositions having triple-chain structure β form crystals of Examples 2 and 3 and Comparative Examples 2 and 3, which had left to stand at 20°C, were used. Using 0.2 parts by weight of each of the oil and fat compositions for one part of the mix, seeding was carried out and the resultant was then poured into a mold, followed by cooling solidification. Mold releasing after the cooling solidification and bloom resistant property after the product was kept at 20°C for one week and then subjected to repeated temperature cycles, each of which is composed of 20°C for 12 hours and 32°C for 12 hours, were evaluated. The results are shown in Table 5. As a reference example, one produced by a usual process of tempering with no seeding being performed was evaluated in the same manner.

**[Table 4]**

| Table 4. Table for formulation of test chocolate product All units are % by weight | |
|---|---|
| Cocoa mass | 40.00 |
| Cocoa butter | 12.00 |
| Powdered sugar | 47.45 |
| Lecithin | 0.05 |
| Flavoring agents | 0.05 |
| Total | 100.00 |

**[Table 5]**

| Table 5. Evaluation of chocolate with oil and fat composition being used for seeding | | | | | |
|---|---|---|---|---|---|
| seeding agent | Oil and fat composition of Example 2 | Oil and fat composition of Example 3 | Oil and fat composition of Comparative Example 2 | Oil and fat composition of Comparative Example 3 | Reference example |
| Mold releasing | Good | Good | Good | Good | Good |
| Bloom resistant property | Bloom occurred after 9 cycles. | Bloom occurred after 9 cycles. | Bloom occurred after 5 cycles. | Bloom occurred after 6 cycles. | Bloom occurred after 8 cycles. |

### <Production of chocolate filling>

According to formulation in Table 6, powdered sugar, whole milk powder, cocoa powder, and cocoa mass, which were solid contents other than an oil and fat composition of Example 3, were placed in a bowl, and 14 parts by weight of the oil and fat composition of Example 3 in a melted state were added thereto, mixed, passed through a roller for comminution and pulverization. The pulverized powder was placed in a bowl, and, while warming the bowl containing the powder over hot water, 31 parts by weight of melting oil and fat composition of Example 3 in which an emulsifier had been dissolved were added gradually thereto and stirred. Once everything was mixed well, the temperature was adjusted to 30°C, and 0.2 parts by weight of the oil and fat composition of Example 3 had left to stand at 20°C in which triple-chain structure β form fat crystals had not been dissolved were mixed well and then, while stirred, cooled to 20°C over an ice water bath, thereby obtaining chocolate filling. The obtained chocolate filling offered light textures and good mouthfeel.

**[Table 6]**

| Table 6. Table for formulation of test chocolate filling All units are % by weight. | |
|---|---|
| Oil and fat composition of Example 3 | 44.8 |
| Powdered sugar | 35.0 |
| Cocoa powder | 10.0 |
| Whole milk powder | 7.8 |
| Cocoa mass | 2.0 |
| Emulsifier | 0.4 |
| Total | 100.0 |

### <Storage test of oil and fat composition>

Samples A and B were prepared by adding as an antioxidant 100 ppm tocopherol (Sample A) and 200 ppm tocopherol (Sample B) to an oil and fat composition of Example 3. Each of Samples A and B was subjected to a storage test for 8 months at a temperature of - 20°C, 4°C, and 20°C. For each sample, at each of the following time points: immediately after production, after 3 weeks, after 1 month, 2 months, 4 months, 6 months, and 8 months, each of the followings was evaluated: acid value, flavor, seeding function, mold-releasing property and appearance, and bloom resistant property.

### <Acid value>

The acid value (mgKOH/g) of each sample was measured by KOH titration based on Japan Oil Chemists' Society Standard Methods for the Analysis of Fats, Oils and Related Materials 2.3.1-1996. The results are shown in Table 7.

**[Table 7]**

| Acid value | Storage at -20°C | | Storage at 4°C | | Storage at 20°C | |
|---|---|---|---|---|---|---|
| | A | B | A | B | A | B |
| Immediately after production | 0.05 | 0.04 | 0.05 | 0.04 | 0.05 | 0.04 |
| After 3 weeks | 0.05 | 0.04 | 0.05 | 0.04 | 0.05 | 0.04 |
| After 1 month | 0.05 | 0.06 | 0.05 | 0.06 | 0.06 | 0.06 |
| After 2 months | 0.04 | 0.05 | 0.05 | 0.04 | 0.05 | 0.04 |
| After 4 months | 0.05 | 0.05 | 0.05 | 0.05 | 0.06 | 0.06 |
| After 6 months | 0.04 | 0.05 | 0.04 | 0.05 | 0.05 | 0.05 |
| After 8 months | 0.05 | 0.06 | 0.05 | 0.05 | 0.06 | 0.06 |

### <Flavor>

Flavor of each sample was evaluated by a blind panel method by 5 to 8 expert panelists with the following standard and an averaged value of results was calculated. The results are shown in Table 8.
Rating scale:
5 ··· The flavor is very good.
4 ··· The flavor is somewhat good.
3 ··· The flavor is not good, but not bad either.
2 ··· The flavor is rather bad.
1 ··· The flavor is very bad.

**[Table 81**

| Flavor | Storage at -20°C | | Storage at 4°C | | Storage at 20°C | |
|---|---|---|---|---|---|---|
| | A | B | A | B | A | B |
| Immediately after production | 4.0 | 4.0 | 4.0 | 4.0 | 4.0 | 4.0 |
| After 3 weeks | 3.9 | 3.7 | 3.9 | 3.9 | 3.9 | 3.9 |
| After 1 month | 3.5 | 3.5 | 3.5 | 3.5 | 3.8 | 3.8 |
| After 2 months | 3.6 | 3.2 | 3.7 | 3.4 | 3.7 | 3.6 |
| After 4 months | 3.4 | 3.2 | 3.2 | 3.2 | 3.8 | 3.6 |
| After 6 months | 3.2 | 3.2 | 3.2 | 3.2 | 3.2 | 3.2 |
| After 8 months | 3.2 | 3.2 | 3.2 | 3.0 | 3.4 | 3.0 |

### <Seeding function>

To cocoa butter at 30°C, each of the samples was individually added in the amount of 0.5% by weight and stirred for 2 minutes. After cooled at 20°C, fat crystals were then analyzed by X-ray diffraction and whether VI crystals (β) were formed was checked. With the VI crystal being present, seeding function is active. The results are shown in Table 9.
Rating scale:
2 ··· VI crystals were formed.
1 ··· VI crystals were not formed.

**[Table 9]**

| Seeding function | Storage at -20°C | | Storage at 4°C | | Storage at 20°C | |
|---|---|---|---|---|---|---|
| | A | B | A | B | A | B |
| Immediately after production | 2 | 2 | 2 | 2 | 2 | 2 |
| After 3 weeks | 2 | 2 | 2 | 2 | 2 | 2 |
| After 1 month | 2 | 2 | 2 | 2 | 2 | 2 |
| After 2 months | 2 | 2 | 2 | 2 | 2 | 2 |
| After 4 months | 2 | 2 | 2 | 2 | 2 | 2 |
| After 6 months | 2 | 2 | 2 | 2 | 2 | 2 |
| After 8 months | 2 | 2 | 2 | 2 | 2 | 2 |

### <Mold-releasing property and appearance >

Using each of the samples, test chocolate was produced by the same procedure as the above test production of chocolate, and mold-releasing property at the time of molding and appearance were then evaluated. The results are shown in Table 10.
Rating scale:
2 ··· There were no problems in mold-releasing property at the time of chocolate molding and appearance.
1 ··· There were problems in mold-releasing property at the time of chocolate molding and appearance.

**[Table 10]**

| Mold-releasing property and appearance | Storage at -20°C | | Storage at 4°C | | Storage at 20°C | |
|---|---|---|---|---|---|---|
| | A | B | A | B | A | B |
| Immediately after production | 2 | 2 | 2 | 2 | 2 | 2 |
| After 3 weeks | 2 | 2 | 2 | 2 | 2 | 2 |
| After 1 month | 2 | 2 | 2 | 2 | 2 | 2 |
| After 2 months | 2 | 2 | 2 | 2 | 2 | 2 |
| After 4 months | 2 | 2 | 2 | 2 | 2 | 2 |
| After 6 months | 2 | 2 | 2 | 2 | 2 | 2 |
| After 8 months | 2 | 2 | 2 | 2 | 2 | 2 |

### <Bloom resistant property>

Using each of the samples, test chocolate was produced by the same procedure as the above test production of chocolate, and whether bloom in chocolate had occurred was then visually checked. The results are shown in Table 11.
Rating scale:
2 ··· Bloom occurred in chocolate.
1 ··· Bloom did not occur in chocolate.

**[Table 11]**

| Bloom resistant property | Storage at -20°C | | Storage at 4°C | | Storage at 20°C | |
|---|---|---|---|---|---|---|
| | A | B | A | B | A | B |
| Immediately after production | 2 | 2 | 2 | 2 | 2 | 2 |
| After 3 weeks | 2 | 2 | 2 | 2 | 2 | 2 |
| After 1 month | 2 | 2 | 2 | 2 | 2 | 2 |
| After 2 months | 2 | 2 | 2 | 2 | 2 | 2 |
| After 4 months | 2 | 2 | 2 | 2 | 2 | 2 |
| After 6 months | 2 | 2 | 2 | 2 | 2 | 2 |
| After 8 months | 2 | 2 | 2 | 2 | 2 | 2 |

### <Production of shortening>

According to formulation in Table 12, an oil and fat composition of Example 3 was melted by heating at 60°C. An emulsifier and antioxidant were added thereto and dissolved, and subjected to, with nitrogen being injected, quick cooling crystallization at an outlet temperature of 20°C in Onlator, thereby yielding shortening. The amount of nitrogen injected varied 4 ml, 8 ml, 14 ml, and 40 ml based on 100 g by weight of shortening to produce the shortening. Each of the produced shortenings was tempered at 27°C for 24 hours and individually stored at 4°C and 20°C. The following physical properties were evaluated at each of the following time points: immediately after production (shortening before tempering), one day after tempering, one month after tempering, and two months after tempering.

**[Table 12]**

| Table of formulation for shortening | Amount formulated (% by weight) |
|---|---|
| Oil and fat composition of Example 3 | 99.97 |
| Emulsifier | 0.0225 |
| Antioxidant | 0.0075 |
| Total | 100.0 |

### <Evaluation of physical properties>

For each of the produced shortenings, stress (N) when a plunger was pressed 15 mm was measured using a rheometer (manufactured by Sun Scientific Co., Ltd., trade name: RHEO METER CR-500DX). The results are shown in Table 13.

**[Table 13]**

| Storage temperature (°C) | Amount of N₂ injected (ml/100 g) | Immediately after production | Storage period | | |
|---|---|---|---|---|---|
| | | | 1 day | 1 month | 2 months |
| 20 | 4 | 0.74 | 0.744 | 0.975 | 0.912 |
| | 8 | 0.847 | 0.73 | 0.973 | 0.981 |
| | 14 | 0.93 | 0.766 | 0.971 | 0.95 |
| | 40 | 0.912 | 0.69 | 0.878 | 0.916 |
| 4 | 4 | 0.74 | 4.491 | 7.033 | 7.474 |
| | 8 | 0.847 | 4.149 | 6.542 | 6.848 |
| | 14 | 0.93 | 3.824 | 5.969 | 6.311 |
| | 40 | 0.912 | 3.151 | 4.506 | 4.364 |

### <Evaluation of particle size>

Using a microscope (manufactured by KEYENCE Corporation, trade name: DGITAL MICROSCOPE VHX-600) and a temperature controlled stage (manufactured by LINKAM, product name: TH-600PM, THMS 600, L-600), observation was made on the stage at 4°C or 20°C with a magnification of 2000 times. The particle size (µm) of 60 fat crystals or more was measured and an average value thereof was calculated. The results are shown in Table 14.

**[Table 14]**

| Storage temperature (°C) | Amount of N₂ injected (ml/100 g) | Immediately after production | Storage period |
|---|---|---|---|
| | | | 1 month |
| 20 | 4 | 2.56 | 3.17 |
| | 8 | 2.34 | 2.43 |
| | 14 | 2.18 | 2.30 |
| | 40 | 1.45 | 2.00 |
| 4 | 4 | 2.56 | 4.02 |
| | 8 | 2.34 | 3.01 |
| | 14 | 2.18 | 2.79 |
| | 40 | 1.45 | 2.73 |

In production of shortening, use of an oil and fat composition of the present invention brought about softer physical property at room temperature, which thereby offered good ease of operation. When the shortening was stored in a temperature zone for cold storage, ease of operation was slightly inferior as compared with storage at room temperature. It was however found that ease of operation in cold storage could be improved by altering the amount of nitrogen injected at the time of production. Further, the greater the amount of nitrogen injected was, the smaller the particle size of fat crystals of the prepared test shortening was. When used as a seeding agent, such a shortening serves as a seeding agent with good dispersion into a chocolate mix.

### INDUSTRIAL APPLICABILITY

By the present invention, an oil and fat composition maintaining StOSt type triglyceride crystals in a fine state stably can be obtained. The oil and fat composition has good plasticity and thus shows good dispersibility when used as a seeding agent of chocolate, which allows high quality chocolate to be simply and conveniently obtained. In addition, with good plasticity, it is suitable for subdivided packaging such as pillow packaging or the like, and offers ease of handling and good workability, which is able to improve, in particular, production efficiency in small-lot production of chocolate.

## Claims

1. An oil and fat composition comprising 4 to 40% by weight of StOSt type triglyceride, 20 to 80% by weight in total of PHX type triglyceride and HX2 type triglyceride, and 8 to 50% by weight of X3 type triglyceride, said oil and fat composition comprising 70 to 100% by weight of the above triglycerides in total, wherein St represents stearic acid, O represents oleic acid, P represents palmitic acid, H represents saturated fatty acid, and X represents unsaturated fatty acid.

2. The oil and fat composition according to claim 1, wherein the content of HX2 type triglyceride is greater than the content of PHX type triglyceride.

3. The oil and fat composition according to any one of claims 1 to 2 comprising oil and fat whose StOSt content is not less than 30% by weight and transesterified oil of palm-based oil and fat and vegetable oil which are in a liquid state at 25°C.

4. The oil and fat composition according to any one of claims 1 to 3 which is in an aerated form.

5. The oil and fat composition according to any one of claims 1 to 4 in which a fat crystal comprises a triple-chain structure β form fat crystal.

6. A seeding agent of chocolate comprising said oil and fat composition according to claim 5.

7. The seeding agent of chocolate according to claim 6 which is filled in pillow packaging or BIB packaging.

8. A chocolate produced using said seeding agent according to any one of claims 6 to 7.

9. A method for producing an oil and fat composition comprising the step of subjecting the oil and fat composition comprising 4 to 40% by weight of StOSt type triglyceride, 20 to 80% by weight in total of PHX type triglyceride and HX2 type triglyceride, and 8 to 50% by weight of X3 type triglyceride, said oil and fat composition comprising 70 to 100% by weight of the above triglycerides in total, to cooling crystallization from a melting state, followed by tempering at 12 to 30°C.

10. The method of production according to claim 9 comprising the step of injecting nitrogen at the time of said cooling crystallization to turn said oil and fat composition into an aerated form.

11. An oil-based food product comprising said oil and fat composition according to any one of claims 1 to 5, wherein said oil and fat composition accounts for not less than 50% by weight of the total oil and fat.
